# EUROPEAN PATENT SPECIFICATION

(11) **EP 3 656 706 B1**
(45) Date of publication and mention of the grant of the patent: **21.07.2021**
(21) Application number: 18207542.4
(22) Date of filing: 21.11.2018
(51) Int. Cl.: B65G 43/08, B65G 15/12

(54) **CONVEYOR WIDTH ADJUSTMENT**
FÖRDERER MIT BREITEVERSTELLUNG
CONVOYEUR RÉGLABLE EN LARGEUR

(43) Date of publication of application: 27.05.2020
(73) Proprietor: JOT Automation Oy, 90590 Oulu (FI)
(72) Inventor: Verronen, Juhani, 90590 Oulu (FI)
(74) Representative: Kolster Oy Ab

(56) References cited:
- WO-A1-2018/146658
- CN-U- 205 837 769
- US-A1- 2003 094 348
- US-A1- 2004 129 534
- US-A1- 2008 092 680

## Description

### TECHNICAL FIELD

The invention relates to conveyor arrangements. Particularly, the present invention relates to adjusting width of a conveyor.

### BACKGROUND

Different devices and objects, such as electronic devices (e.g. mobile phones, tablet computers, laptops, circuit boards and the like), may need to be conveyed, for example, in a testing and/or manufacturing system(s). For example, electronic devices may be conveyed between different manufacturing phases and/or to testing area(s) for testing. One example of such area is a testing chamber such as a radio frequency chamber or an audio chamber. As the number of different devices increases it may be beneficial to provide solutions that enable conveying devices of different shape and size. Thus, increasing adjustability of the known conveyor arrangements may be needed. One solution that enables conveying devices of different shapes and sizes, according to the preamble of claim 1, is for example described in US 2008/0092680 A1.

### BRIEF DESCRIPTION

According to an aspect, there is provided the subject matter of the independent claims. Some embodiments are defined in the dependent claims.

One or more examples of implementations are set forth in more detail in the accompanying drawings and the description below. Other features will be apparent from the description and drawings, and from the claims.

### BRIEF DESCRIPTION OF DRAWINGS

In the following embodiments will be described in greater detail with reference to the attached drawings, in which
Figures 1A and 1B illustrate conveyor arrangements according to some embodiments;
Figures 2, 3, 4, 5, and 6 illustrate the conveyor arrangement according to some embodiments;
Figures 7, 8, 9 illustrate some embodiments; and
Figure 10 illustrates a method according to an embodiment.

### DETAILED DESCRIPTION OF SOME EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. All combinations of the embodiments are considered possible if their combination does not lead to structural or logical contradiction.

Conveyor arrangements may be used in various systems. Examples of such systems may include manufacturing and/or testing systems. For example, in order to ensure high quality and to reduce failures of manufactured electronic devices, e.g. mobile phones, tablets, portable computers, circuit boards (e.g. Printed Circuit Board (PCB)) and/or their elements or electric circuits, various testing processes may be carried out on a production and/or testing line. A testing chamber may operate in production lines or as a stand-alone chamber in a product development environment. The test may test various interfaces and/or functionalities of an electronic devices, such as radio frequency communication, audio, optical, electric circuits, and/or user interfaces to verify that the production process has assembled the device correctly. All functions of the test needed for the testing processes are typically automated. Although the proposed solutions described herein may be applicable to various different systems utilizing conveyor arrangements for conveying devices, testing systems and electronic devices are used as examples due to simplicity reasons. However, the presented solutions may be particularly applicable to testing systems for testing function(s) of electronic devices.

As technology advances, there seems to be an ever-growing need to provide new devices and gadgets for consumer market. Hence, parts of the devices (e.g. circuit boards) and the devices themselves may come in different shapes and sizes. This may cause further requirements for the manufacturing and testing systems. One is that these different sized and shaped devices may need to be manufactured and/or tested using the same manufacturing and/or testing line. So, if today circuit boards having certain dimensions are manufactured, tomorrow the dimensions may change. For example, this may mean that the same conveyor arrangement may be adjusted in terms of, for example, width so that the conveyor arrangement may be used to convey devices of different shape and size. On the other hand, it would be great if the manufacturing lines support LEAN philosophy, particularly meaning solutions which thrive towards patch size of one. So, effectively this could mean that devices of different size and shape could be conveyed utilizing the same conveyor without manual labour and with short interruptions. Therefore, there is provided a solution for at least partially or fully automated conveyor arrangement width adjustment. The presented solution provides an effective and simple solution to change width of a conveyor so that the same conveyor can be used to convey devices having different dimension(s) (i.e. devices have different size and/or shape).

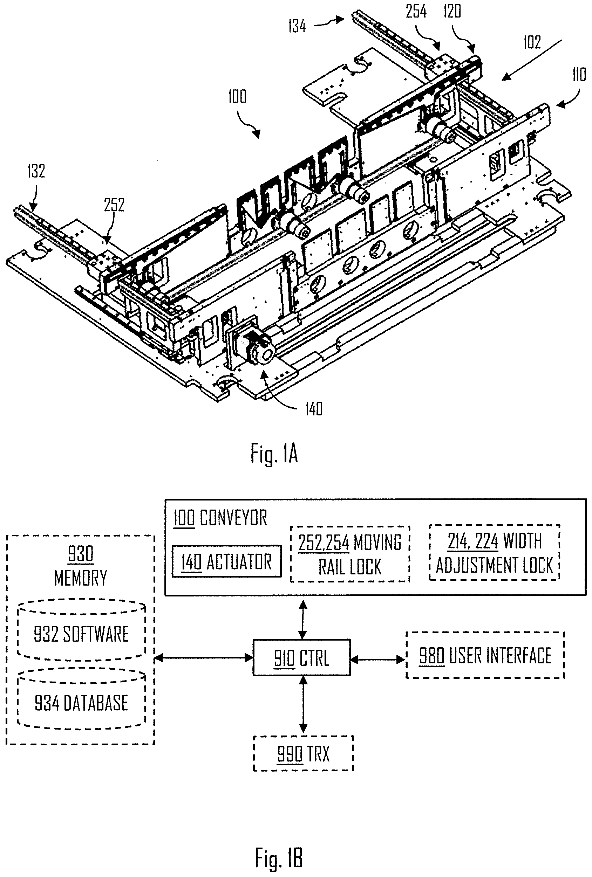

Figures 1A and 1B illustrates some embodiments of a conveyor arrangement. The conveyor arrangement may be referred to also as a conveyor or a lift conveyor, or comprises the conveyor or the lift conveyor (e.g. conveyor 100). In some example embodiments, the conveyor arrangement comprises a plurality of conveyors and/or lift conveyors. Conveyors discussed herein may refer to, for example, belt conveyors.

Referring to Figures 1A and 1B, the conveyor arrangement according to an embodiment comprises a conveyor 100 comprising a first rail 110 and a second rail 120. In an embodiment, each rail comprises a belt for performing the conveying. In general terms, the belt may be referred to as a conveyor transfer member and may comprise, for example, one or more rolls or a shelf. So, the belt may be arranged to move, for example, on the rolls or on the shelf. The first and second rails 110, 120 may be movable. That is, the rails 110, 120 distance from each other may be changed, and thus the width of a conveyor lane 102 may be changed.

The conveyor arrangement may further comprise an actuator 140 and a controller 910 operatively connected with each other. That is, the controller 910 may control the actuator. The controller 910 may be configured to perform operations comprising: obtaining input data regarding at least one product to be conveyed by the conveyor; determining the conveyor lane 102 width based on the input data, the conveyor lane 102 width defined by a distance between the first and second movable rails 110, 120; transmitting a control signal to the actuator 140 causing the first rail 110 to move towards the second rail 120, the movement of the first rail 110 towards the second rail 120 causing the second rail 120 to move towards a reference point; and after the second rail 120 has reached the reference point, transmitting a control signal to the actuator 140 causing the first rail 110 to move to opposite direction to achieve the determined conveyor lane 102 width.

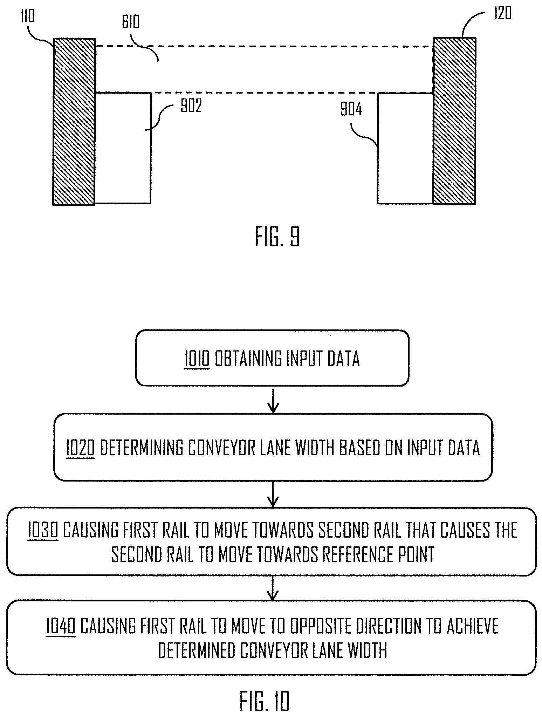

Figure 10 shows a method for controlling conveyor lane width according to an embodiment. Referring to Figure 10, the method comprises: obtaining (block 1010), by the controller 910, input data regarding at least one product to be conveyed by the conveyor 100; determining (block 1020) a conveyor lane 102 width based on the input data, the conveyor lane 102 width defined by or being a distance between the first and second rails 110, 120 of the conveyor 100, the first and second rails 110, 120 being movable; causing (block 1030) the first rail 110 to move towards the second rail 120, the movement of the first rail 110 towards the second rail 120 causing the second rail 120 to move towards a reference point; and after the second rail 120 has reached the reference point, causing (block 1040) the first rail 110 to move to opposite direction to achieve the determined conveyor lane 102 width.

Movable rails may refer to the rails 110, 120 being movable laterally, i.e. sideways. So, the movable rails may refer to the distance between the rails 110, 120 being adjustable.

So, basically in step 1020 the controller 910 may determine needed or desired conveyor lane width based on input data. For example, the input data may indicate width of the device or product that is or needs to be conveyed. The controller 910 may then control the actuator to cause the rails 110, 120 to move to obtain the determined conveyor lane width. That is the conveyor lane 102 may be adjusted to the needed width (i.e. width determined in block 1020).

The controller 910 discussed above may be implemented utilizing various technologies. For example, the controller 910 may be a specific circuitry or circuitries configured for controlling the conveyor 100. Examples of such circuitries may comprise Application Specific Integrated Circuit (ASIC) and Field-programmable gate array (FPGA).

According to an embodiment, the controller 910 comprises at least one processor. Further, the arrangement may comprise at least one memory 930 including a computer program code (software) 932, wherein the at least one memory and the computer program code (software) 932, are configured, with the at least one processor, to cause the conveyor arrangement to carry out any one of the embodiments and/or operations discussed herein (e.g. method of Figure 10). Thus, the control by the controller 910 may be realized using at least one processor and at least one memory 930 comprising a software 932 according to an embodiment.

The memory 930, may be implemented using any suitable data storage technology, such as semiconductor based memory devices, flash memory, magnetic memory devices and systems, optical memory devices and systems, fixed memory and removable memory. The memory 930 may comprise a database 934 for storing data, such as product information (e.g. product or device width for adjusting the conveyor lane width).

In an embodiment, the arrangment comprises a radio interface (TRX) 990 comprising hardware and/or software for realizing communication connectivity according to one or more communication protocols (e.g. Bluetooth, cellular communication, Wireless Local Area Network (WLAN) and/or Local Area Network (LAN)). The TRX may provide the arrangment with communication capabilities to enable remote control of the arrangment, for example. The TRX may comprise standard well-known components such as an amplifier, filter, frequency-converter, (de)modulator, and encoder/decoder circuitries and one or more antennas.

In an embodiment, the arrangement comprises a user interface 980 comprising, for example, at least one keypad, a microphone, a touch display, a display, a speaker, etc. The user interface 980 be used to control the arrangement 900 by a user. For example, user interface 980 may be remotely used via the TRX 990. For example, the input data regarding the width adjustment may be obtained via the user interface 980 and/or TRX 990. For example, the input data may be inputted by a user via the user interface 980. So, the user interface 980 may be configured to obtain user input and to provide the user input to the controller 910. The user input may comprise the input data discussed above. For example, the input data may thus define dimension(s) (e.g. at least width) of the to-be-conveyed device or product so that the controller 910 may determine the conveyor lane width based on the input data and cause the actuator to adjust the width accordingly. In another example, the input data is provided by the conveyor arrangement or by an external system. For example, the input data may be obtained by the controller 910 based on product identifier from a database (e.g. database 934). In a further example, the input data is obtained via sensor arrangement (e.g. machine vision or some other type measurement system for determining dimension(s) of the product to-be-conveyed). Hence, also in this sense the width adjustment may be automated, thus reducing the need for a user to provide input. However, it may be rather simple solution, according to an embodiment, to provide, via the user interface 980, a list of products or devices from which the user may select the product or device that needs to be conveyed next. The listed products or devices may each be associated with a certain width that is inputted, by the user interface 980, to the controller 910 via the input data based on the user selection. Hence, the conveyor lane 102 width may be adjusted based on the selected product or device and its listed width. Furthermore, the list may be updated, for example, via user input, and thus the user may add, using the user interface 980, new products to the list and define their dimension(s). It may also be possible to delete products from the list and/or change their width value.

The actuator 140 may take different forms. For example, the word actuator 140 may comprise entities such as servo, servomotor, motor, and electric motor. It is noted that there may be further powers source(s) and/or actuator(s) in the conveyor arrangement. For example, there could be an additional actuator(s) for generating the movement of the conveyor transfer member(s) (e.g. belt movement). In an embodiment, the actuator 140 is a servomotor or at least comprises a servomotor controlled by the controller 910. The servomotor may sometimes be referred to as Y-movement servo, where the Y-movement may refer to sideways movement of the conveyor 100.

So, as shortly discussed above, the presented solution provides benefits compared with the known conveyor arrangements. One is that the conveyor lane 102 width can be automatically adjusted. Further, the width adjustment is accurate as the second rail 120 is driven to the reference point before the first rail 110 is moved to obtain the determined width. Even further, the presented solution is simple as second rail 120 is moved to the reference point by using the first rail 110. That is, there may be no need to use different actuator for moving each rail 110, 120 (e.g. rail specific actuator). Instead, the actuator 140 may be used to move the first rail 110, and e.g. push the second rail 120 to the reference point. Further, the actuator 140 may be used to move the first rail 110 to the determined distance from the reference point (i.e. needed width determined based on input data).

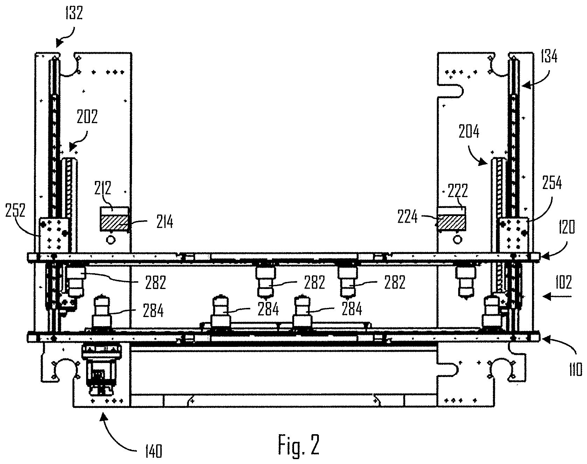

At this point it is noted that not all elements in all Figures are illustrated with reference signs due to simplicity reasons. The skilled person understands that if an element is given a reference number in at least one Figure, the same reference number may apply in other Figures not explicitly displaying the reference number. That said, referring to Figure 1A, the conveyor arrangement may further comprise one or more bars 132, 134 for guiding the movement of the rails 110, 120. The bars 132, 134 may be perpendicular with respect to the rails 110, 120. Hence, the bars 132, 134 may enable the rails 110, 120 to move sideways, i.e. perpendicular compared with the movement of the conveyed device along the conveyor lane 102. The skilled person understands that the conveyor arrangement may comprise means and/or elements (e.g. electric and/or magnetic components) that cause the actuator 140 to move the first rail 110 to a direction that is parallel with the bars 132, 134. Parallel may mean concurrent or opposite direction as the skilled person understands. One example of such means and/or elements is shown in Figure 2 illustrating width adjustment members 202, 204. So, for example, the sideways movement of the rails 110, 120 may be caused by the actuator 140 causing the adjustment members 202, 204 to move the first rail 110 and/or the second rail 120. In an embodiment, the adjustment members 202, 204 comprise an adjustment screw operatively connected to the actuator 140 via force transferring member (e.g. a belt, axel or shaft). Rotation of the adjustment screw 202, 204 may be used to cause the sideways movement of the first rail 110 and/or the second rail 120. In another example, the sideways movement is caused by utilizing a belt or belts. Hence, the adjustment screws 202, 204 are not always necessary. For example, the first rail 110 may be moved to directions 292 and 492. If the lock(s) 252, 254 is engaged, the same adjustment member 202, 204 (e.g. screw or belt) may be used to control both width and sideways positon of the conveyor. In an example embodiment, the adjustment screw 202, 204 (i.e. one or more screws) is a ball-race screw or a trapezoidal screw.

Referring to Figures 1A and 1B, according to an embodiment, the conveyor 100 (or conveyor arrangement in more general terms) further comprises a moving rail lock 252, 254.

Referring to Figures 1A and 1B, according to an embodiment, the conveyor 100 (or conveyor arrangement in more general terms) further comprises a width adjustment lock 214, 224.

Operation of said one or more locks 252, 254, 214, 224 may be controlled by the controller (CTRL) 910. Thus, the one or more locks 252, 254, 214, 224 locks may be operatively connected with the controller 910. Operations of said one or more locks will now be discussed in more detail.

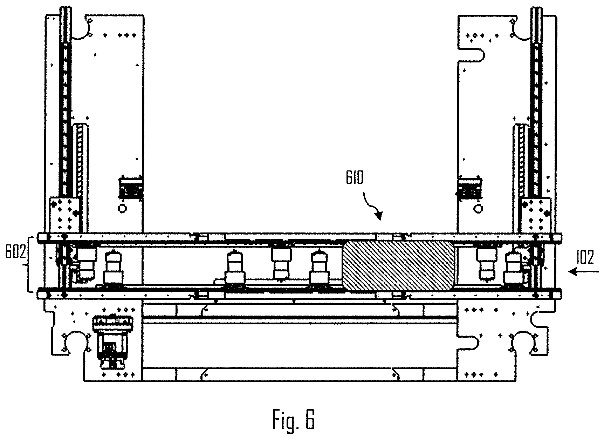

Figures 2, 3, 4, 5, and 6 illustrate different phases of operation (i.e. including the width adjustment) of the conveyor arrangement from top view. Referring to Figure 2, the rails 110, 120 are shown to be at a distance from each other. If the conveyor 100 is used to convey a product or a device (e.g. see device 610 of Figure 6 which may be an electronic device such as an circuit board for example), the moving rail lock 252, 254 may be engaged or active. This may mean that the moving rail lock 252, 254 is in locked state. More specifically, this may mean that the moving rail lock 252, 254 locks the distance between the rails 110, 120, i.e. moving rail lock 252, 254 may be thus be used to lock the conveyor lane 102 width to the adjusted width. Hence, when the moving rail lock 252, 254 is engaged, the rails 110, 120 may be moved, by the actuator 140, to a product take in position. I.e. as the lock 252, 254 locks the distance between the rails 110, 120, the movement caused by the actuator 140 moves both rails 110, 120 simultaneously such that the distance between the rails 110, 120 remains the same. Hence, a further benefit is obtained by using the same actuator for width adjustment and to move the conveyor 100 into product take in (i.e. input) position. As the skilled person understands, the width adjustment can be performed when moving rail lock 252, 254 is not engaged or inactive, i.e. the moving rail lock 252, 254 is in an unlocked state. So, when the lock 252, 254 is not engaged, the distance between the rails 110, 120 is adjustable.

In other words, in an embodiment the controller 910 is further configured to perform operations comprising: after the moving rail lock 252, 254 is activated, transmitting a control signal to the actuator 140 causing the conveyor to move to a product input position.

In an embodiment, after the conveyor 100 is moved to the product input position, the controller 910 is configured to cause the conveyor 100 to convey the at least one product (e.g. circuit board).

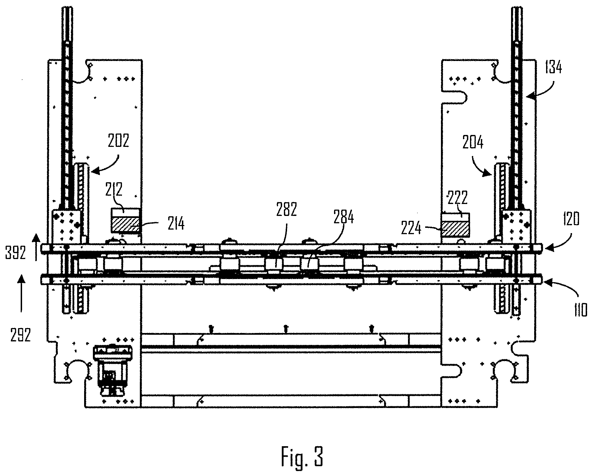

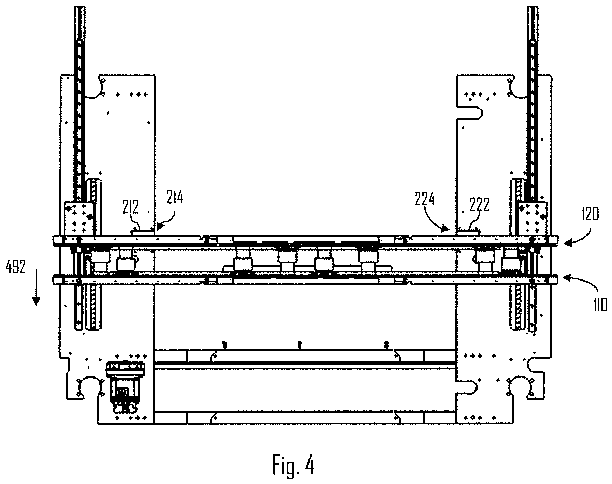

Still looking at Figure 2, the conveyor arrangement may further comprise a stopper 212, 222 for stopping the second rail 120 at the reference point. This is illustrated in Figures 2, 3, and 4. Specifically, in Figure 3 the movement of the first rail 110 is shown with an arrow 292. The first rail 110 may start to push the second rail 120 towards the reference point. The movement of the second rail 110 is shown with an arrow 392. In Figure 4 it can be seen that the second rail 120 has reached the reference point and is stopped by the stopper 212, 222 at the reference point. So, the reference point may refer to the location at which the stopper 212, 222 stops the second rail 120 by obstructing the movement of the second rail 120 to the direction of the movement 392. Thus, the reference point may be predetermined. The width adjustment lock 214, 224 may be used to lock the second rail to the reference point, i.e. once/in response to the second rail reaching the reference point. For example, the lock 214, 224 may comprise a latch(s) that locks the second rail 120 to the reference point. E.g. the latch may comprise a latch bolt and a corresponding counterpart for the bolt. In an embodiment, the counterpart (e.g. cavity) is situated at the rail 120 and the bolt is indicated with reference number 214, 224, or vice versa. For example, the rail 120 may be pushed on (i.e. on top of) the latch or bolt 214, 224, and then the latch or bolt 214, 224 may be used to lock the second rail 120 to the reference point. The controller 910 may be used to control the width adjustment lock 214, 224 into the locked and unlocked (or open) states. If the lock 214, 224 is locked, the second rail 120 may not move from the reference point. The lock 214, 224 may be unlocked and the moving rail lock 252, 254 locked so that the conveyor 100 may be driven to the product take in position after the width has been adjusted.

Let us then look step by the how the different phases of the width adjustment may be performed. Referring to Figure 3, the controller 910 may cause the first rail 110 to move 292 towards the second rail 392 and to push the second rail 120 towards the reference point. In an embodiment, the first rail 110 comprises pusher(s) that are configured to be come in contact with the second rail 120, and to push the second rail 120 towards the reference point. In an embodiment, alternatively or additionally the second rail 120 comprises pusher(s). The pusher(s) may be protrusions from example and may prevent the conveyor parts of the rails 110, 120 to become into direct contact with each other.

The stopper 212, 222 may stop the second rail 120 to the reference point. Consequently, the movement of the first rail 110 may also stop. For example, this may be detected by the controller 910 (e.g. based on sensor data, by detecting that the rails 110, 120 have stopped, or by utilizing encoder data, such as data from a linear encoder comprised in the conveyor arrangement), and thus the next phase may be initiated. Hence, as shown in Figure 4, the width adjustment lock 214, 224 may be engaged, and the second rail 120 locked to the reference point. This may be performed in response to detecting, by the controller, that the reference point has been reached. After the width adjustment lock 214, 224 has been engaged, the conveyor lane width may be adjusted to the determined width (e.g. determined based on product dimension(s)) by moving the first rail 110 to the opposite direction (see arrow 492 of Figure 4). The dimension(s) may include at least width and possibly additionally height and length. However, width of the product or device to be conveyed may suffice for adjusting the width of the conveyor lane 102.

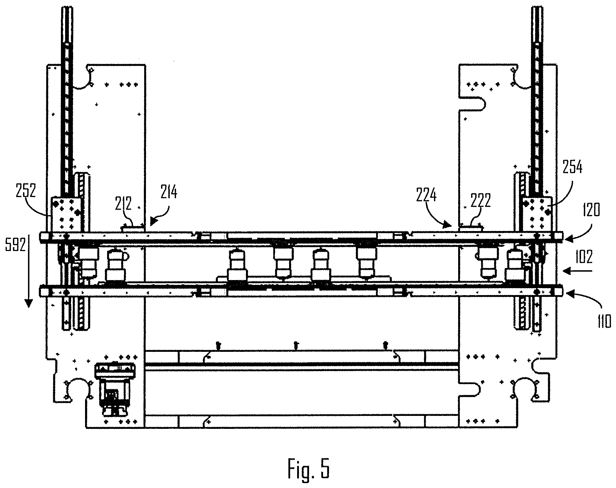

After and/or upon the determined width has been reached, the moving rail lock 252, 254 may be engaged by the controller 910, and the width locked. Further, the width adjustment lock 214, 224 may be unlocked, by the controller 910, so that the rails 110, 120 may move in direction(s) parallel with the bars 132, 134. Thus, the conveyor 100 may be driven to the product input position by the controller 910. This product input position movement is indicated with an arrow 592 of Figure 5. It is noted that the direction may be opposite depending on where the product is inputted. So, the position may be changed towards direction 592 or opposite to direction 592. Y movement may comprise both directions, for example, and can be referred to as Y axis, wherein the conveyor side position may be changed on the Y axis.

In Figure 6 it is shown that the product or device 610 is conveyed by the conveyor 100 along the conveyor lane 102, wherein there is a distance 602 between the first and second rails 110, 120 (i.e. determined width for conveying the product 610).

In an embodiment, the controller 910 is further caused to unlock the moving rail lock 252, 254 before causing the first rail 110 to move towards the second rail 120 that causes the second rail 120 to move towards the reference point. So, the moving rail lock 252, 254 may need to be unlocked before the distance between the rails 110, 120 may be adjusted.

So, according to the described principles, the controller 910 may adjust the width of the conveyor lane 102 based on the input data based on which the width may be determined. The input data may, as noted, indicate at least the width of the product to be conveyed and/or it may indicate the width to which the conveyor lane 102 needs to be adjusted to. The width of the conveyor lane 102 may vary depending on the product that needs to be conveyed.

In an embodiment, a same actuator 140 is used to provide power for moving the first and second rails 110, 120 to achieve the determined conveyor lane 102 width and for moving the conveyor to the product input position. This was discussed above in more detail. In an embodiment, said same actuator comprises a servomotor. So, the same servo or servomotor may be used for the width adjustment and side movement of the conveyor 100. Such solution provides a cost effective and simple way to adjust the width as needed and move the conveyor 100 to a product take in position as needed. For example, the conveyor 100 may be configured to take in product(s) from other conveyor(s) and/or provide products for other conveyor(s). Hence, side movement by the conveyor 100 as a whole may be beneficial in addition to the side movement to obtain the determined width of the conveyor lane 102.

In an embodiment, the input data comprises user input data. In an embodiment, the input data indicates at least the width of the at least one product to be conveyed. As noted, the input data may obtained using the TRX 990 and/or user interface 980.

In an embodiment, the input data comprises data indicating width of the product or device to be conveyed. The indication may, for example, be an explicit indication of the width of the product or device. Additionally, it is possible that height and/or length is indicated.

It is further noted that in some example embodiments, the moving rail lock 252, 254 may actually comprise a lock for each bar 132, 134. So, for example, there can be two moving rail locks 252, 254. Normally, these may be operated as one entity, and, for example, locking signal provided by the controller 910 may lock both locks and unlocking signal may unlock both locks. Similarly, there can be at least two stoppers 212, 222 and width adjustments locks 214, 224. So, the second rail 120 may be stopped by both stoppers 212, 222, and also locked from at least two points to the reference point.

However, as the skilled person understands, there can be only one lock 252 in some embodiments. Furthermore, in some embodiments, only one width adjustment member 202 and bar 132 may suffice. Similarly, only one stopper 212 may be enough. Further, only one lock 214 may be enough. This may be especially true for embodiments which utilize only one width adjustment member 202 (e.g. only one adjustment screw). For example, if the conveyor lane 102 is relatively short, one width adjustment member 202 may be enough. If the conveyor lane 102 gets longer, for stability, it may be beneficial to utilize two or more width adjustment members 202, 204, and consequently two or more stoppers, two or more width adjustments locks and two or more bars 132, 134.

In an embodiment, the stopper 212, 222 is operated by the controller 910. For example, the stopper 212, 222 may be driven to stop position and open position. In the stop position, the stopper 212, 222 may obstruct movement of the second rail 120. In the open position, the stopper 212, 222 may not obstruct the movement of the second rail 120. In other words, the stopper 212, 222 may be driven down such that the second rail 120 may move over the stopper 212, 222. For example, the stopper 212, 222 may be pneumatic.

In an embodiment, the stopper 212, 222 comprises a protrusion or a physical block. In an embodiment, the protrusion 212, 222 is fixed. I.e. it may not necessarily be driven between stop and open positions, and thus may, for example, always stop the second rail at the reference point. In an embodiment, the stopper 212, 222 is a fixed protrusion(s) that obstructs the movement of the second rail 120 beyond the reference point. So, the fixed protrusion(s) may stop the second rail 120 at the reference point.

The width adjustment may be summarized as follows according to some example embodiments:
- Second rail 120 (e.g. can be referred to as a moving rail) is unlocked by releasing lock 252, 254 from both sides or ends of the conveyor 100;
- First rail 110 (e.g. can be referred to as a fixed rail) is driven to home position by using actuator 140 (e.g. Y-servo or the like);
- Second rail 120 is pushed against stopper block 212, 222, and movement of the rails 110, 120 stops when the second rail 120 is stopped by the stopper and the first rail 110 reaches minimum conveyor width (e.g. 50 millimeters) (i.e. cannot be pushed any closer to the second rail 120);
- Second rail 120 is locked by width adjustment lock 214, 224 and first rail 110 is driven to wanted width value;
- Width adjustment lock 214, 224 is released and moving rail lock 252, 254 is activated; and
- Conveyor is driven to product take in position.

Looking yet again at Figure 2, according to an example embodiment, the conveyor arrangement further comprises motors 282, 284 for providing operating power for the transfer members (e.g. belts) of the conveyor 100. According to an embodiment, the rails 110, 120 comprise openings (e.g. through holes) for the motors 282, 284. This enables the rails 110, 120 to be driven closer to each other, and further enables the motors 282, 284 not to be in contact with the other rail when the first rail 110 is used to push the second rail 120 to the reference point. So, the openings in the rails 110, 120 may enable the rails 110, 120 to move, in a way, within each other (see e.g. Figure 3 where the motors 282 penetrate through holes in the first rail 110, and the motors 284 penetrate through holes in the second rail 120). So, some other part of the rails 110, 120 may become in contact with each other and thus protect the motors 282, 284. It is further noted that the motors 282, 284 may be placed to face outwards in some embodiments, and therefore there may be no need to provide the openings to the rails 110, 120.

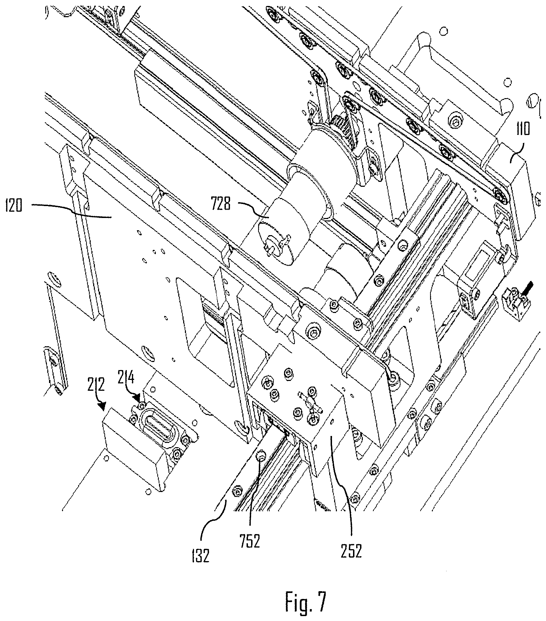

Figures 7, 8, and 9 illustrate some embodiments showing some features in more detail. Referring to Figure 7, the moving rail lock 252 is shown. As noted, there can be one or more of said locks 252, 254, for example, one for each bar 132, 134 (e.g. one or more bars). According to an embodiment, the moving rail lock 252, 254 locks the distance between the rails 110, 120 by locking the second rail 120 to the bar 132, 134. For example, in such case the first rail may be fixedly attached to the bar 132, 134. However, it is possible that the moving rail lock 252, 254 is configured to lock both rails 110, 120 to the bar or bars 132, 134.

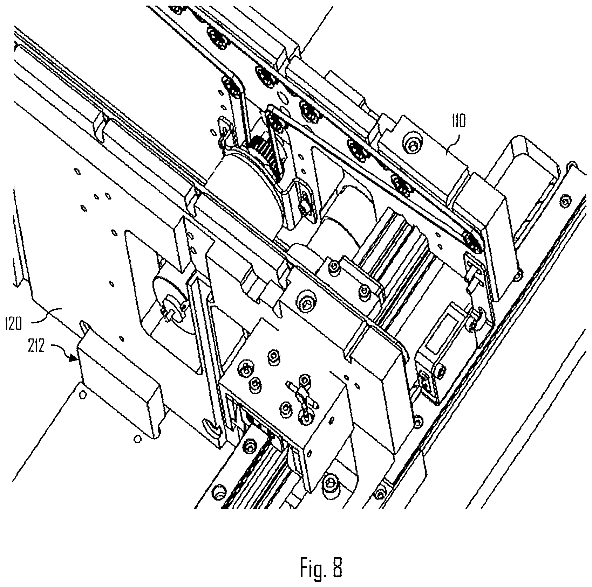

So, according to one example embodiment, when the moving rail lock 252, 254 is not engaged (i.e. in unlocked state) the actuator 140 may cause a force to the first rail 110, thus moving the first rail 110 towards the second rail 120. As the lock 252, 254 is open, the bar 132, 134 may slide trough an opening of the second rail 120. I.e. in such case (e.g. Figure 7) the first rail 110 may be fixed to the bar 132, 134 (e.g. at the end of the bar 132, 134). As described above, the second rail 120 may be pushed against the stopper 212, 222 (this can be seen in Figure 8) and the width adjustment may continue as indicated above. So, the lock 214, 224 may be used to lock the second rail 120 to the reference point, and the first rail 110 moved to opposite direction so that the distance between the first and second rails 110, 120 increases to the determined width.

In an embodiment, the moving rail lock 252, 254 comprises a pin or a latch that is configured to lock the second rail 120 to the bar 132, 134. The bar 132, 134 may comprise corresponding cavity 752 for the pin or latch. In an embodiment, the cavity or cavities 752 are arranged to the bar 132, 134 at predetermined distance from each other. The pin or latch may be operated by the controller 910 so that the pin or latch may be used to engage the cavity 752 and thus lock the second rail 120 to the bar 132, 134. Opening may be performed by disengaging the pin or latch from the cavity 752.

In an embodiment, the moving rail lock 252, 254 operates steplessly. This may mean that the second rail 120 may be locked freely at any point to the bar 132, 134 using the moving rail lock 252, 254 (e.g. no need for pin/latch and corresponding cavity 752). For example, the stepless moving rail lock 252, 254 may be based on friction (i.e. is a friction lock or the like). Thus, the distance between the first and second rails 110, 120 can be changed steplessly which may be a further benefit.

In an embodiment, the moving rail lock 252, 254 is fixed to the second rail 120. In an embodiment, the moving rail lock 252, 254 is integral part of the second rail 120.

In an embodiment, the bar 132 and/or bar 134 are referred to as guiding bars 132, 134. This may be because the bars 132, 134 may guide the movement of the rails 110, 120 along a predetermined track that is parallel with the bars 132, 134 and hence perpendicular with the extending rails 110, 120. This can be clearly seen in the attached Figures (e.g. Figures, 2, 3, 4, 5, 6, 7, and 8). In an embodiment, the bar 132 and/or bar 134 is referred to as linear guide 132, 134. The second rail 120 (which can be referred to as a moving rail) can move along the linear guiders 132, 134 when the moving rail lock 252, 254 is not locked (i.e. is inactive).

Referring to Figure 9, the rails 110, 120 may each comprise a transfer member 902, 904, such as belt and/or rolls. The device or product 610 may be configured to be conveyed by the transfer members 902, 904. In an embodiment, the width between the rails 110, 120 is adjusted, by the controller 910, such that the device or product is to be situated between the rails 110, 120 as indicated in Figure 9. Thus, the rails 110, 120 may additionally act as guiding rails for the conveyor lane 102, preventing the device or product 610 to drop off the conveyor lane 102. So, in an embodiment, the transfer members 902, 904 are situated between the rails 110, 120. However, in some embodiments, the arrangement may be different (e.g. transfer members 902, 904 are situated on the rails 110, 120).

It is noted that the rails 110, 120 may be side rails of the conveyor 100. Further, the side rails 110, 120 may be movable as described above, and may be side parts of the conveyor. In some cases, the side rails 110, 120 may form the frame of the conveyor, or at least a part of the frame of the conveyor 100.

In an embodiment, there is provided a computer program product comprising instructions to cause a conveyor arrangement to execute the steps of the method indicated in Figure 10 and/or operations described herein. For example, the controller 910 may be configured to execute said steps based on the computer program product. The computer program may be distributed using a distribution medium which may be any medium readable by the controller 910. The medium may be a program storage medium, a memory, a software distribution package, or a compressed software package. In some cases, the distribution may be performed using at least one of the following: a near field communication signal, a short distance signal, and a telecommunications signal.

The presented width control enables the use of the conveyor arrangement and conveyor 100 to convey different size devices and products. The proposed solution may work automatically or semi-automatically, wherein the width of the conveyor lane 102 (or conveyor path) is controlled based on the data on the to-be-conveyed product or device. The width may be controlled each time before a different sized device is conveyed, and specifically the width of the device is different than the conveyor lane 102 width. One example environment where such conveyor(s) 100 may be used is a testing system. In an embodiment, a plurality of conveyors 100 may be used and their conveyor lane 102 width controlled jointly or separately.

According to an example embodiment, there is provided a system, such as a testing or a manufacturing system, comprising the conveyor arrangement (e.g. Figures 1A and 1B).

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method for controlling conveyor lane width, the method comprising:
obtaining, by a controller (910), input data regarding at least one product to be conveyed by a conveyor;
determining a conveyor lane width based on the input data, the conveyor lane width defined by a distance between first and second rails (110)(120) of the conveyor, the first and second rails being movable; **characterized in that** the method further comprises the steps of:
causing the first rail to move towards the second rail that causes the second rail to move towards a reference point; and
after the second rail has reached the reference point, causing the first rail to move to opposite direction to achieve the determined conveyor lane width.

2. The method of claim 1, further comprising:
causing the first rail to push the second rail to the reference point; and
stopping, by a stopper (212)(222), the second rail at the reference point.

3. The method of claim 1 or 2, further comprising:
causing a width adjustment lock (214)(224) to lock the second rail to the reference point; and
adjusting the conveyor lane width by causing the first rail to move to the opposite direction.

4. The method of claim 1, 2, or 3, further comprising:
upon achieving the determined conveyor lane width, causing activation of a moving rail lock (252)(254) that locks a distance between the first and second rails; and
causing unlocking the width adjustment lock.

5. The method of claim 4, further comprising:
after the moving rail lock is activated, causing the conveyor to move to a product input position.

6. The method of claim 4 or 5, further comprising:
causing unlocking the moving rail lock before causing the first rail to move towards the second rail that causes the second rail to move towards the reference point.

7. The method of any preceding claim, wherein a same actuator (140) is used to provide power for moving the first and second rails to achieve the determined conveyor lane width and for moving the conveyor to the product input position.

8. The method of claim 7, wherein said same actuator comprises a servomotor.

9. The method of any preceding claim, wherein the input data comprises user input data.

10. The method of any preceding claim, wherein the input data indicates at least the width of the at least one product to be conveyed.

11. A conveyor arrangement, the conveyor arrangement comprising:
a conveyor (100) comprising first and second rails (110)(120) being movable;
an actuator (140); and
a controller (910) configured at least to perform operations comprising:
obtaining input data regarding at least one product to be conveyed by the conveyor,
determining a conveyor lane width based on the input data, the conveyor lane width defined by a distance between the first and second movable rails, **characterized in that** the controller is further configured to perform the following operations comprising:
transmitting a control signal to the actuator causing the first rail to move towards the second rail that causes the second rail to move towards a reference point, and
after the second rail has reached the reference point, transmitting a control signal to the actuator causing the first rail to move to opposite direction to achieve the determined conveyor lane width.

12. The conveyor arrangement of claim 11, further comprising:
a stopper (212)(222) for stopping the second rail at the reference point; and
a width adjustment lock (214)(224) for locking the second rail to the reference point.

13. The conveyor arrangement of claim 11 or 12, further comprising:
a moving rail lock (252)(254) for locking a distance between the first and second rails.

14. The conveyor arrangement of claim 13, wherein the controller is further configured to perform operations comprising:
after the moving rail lock is activated, transmitting a control signal to the actuator causing the conveyor to move to a product input position.

15. A computer program product comprising instructions to cause a conveyor arrangement of any of claims 11 to 14 to execute the steps of the method of any of claims 1 to 10.

## Patentansprüche

1. Ein Verfahren zum Steuern einer Fördererspur-Breite, wobei dieses Verfahren umfasst:
Erhalten, über einen Controller (910), von Eingabedaten über mindestens ein Produkt, das mit einem Förderer zu befördern ist;
Ermitteln einer Fördererspur-Breite auf der Basis der Eingabedaten, wobei die Fördererspur-Breite durch einen Abstand zwischen der ersten und zweiten Schiene (110) (120) des Förderers definiert ist, wobei die erste und zweite Schiene verschiebbar sind;
**dadurch gekennzeichnet, dass** das Verfahren weiter folgende Schritte umfasst:
Bewirken, dass sich die erste Schiene zur zweiten Schiene bewegt, wodurch die zweite Schiene zu einem Referenzpunkt verschoben wird; und
Bewirken, nachdem die zweite Schiene den Referenzpunkt erreicht hat, dass sich die erste Schiene in die entgegengesetzte Richtung bewegt, um die ermittelte Fördererspur-Breite zu erreichen.

2. Das Verfahren nach Anspruch 1, das weiter umfasst:
Bewirken, dass die erste Schiene die zweite Schiene zum Referenzpunkt drückt; und
Anhalten, durch einen Anschlag (212) (222), der zweiten Schiene am Referenzpunkt.

3. Das Verfahren nach Anspruch 1 oder 2, das weiter umfasst:
Bewirken, dass eine Breiteverstellungssperre (214)(224) die zweite Schiene am Referenzpunkt verriegelt; und
Anpassen der Fördererspur-Breite, indem bewirkt wird, dass sich die erste Schiene in die entgegengesetzte Richtung bewegt.

4. Das Verfahren nach Anspruch 1, 2 oder 3, das weiter umfasst:
Bewirken, nachdem die ermittelte Fördererspur-Breite erreicht wurde, dass eine verschiebbare Schienensperre (252)(254) zum Verriegeln eines Abstands zwischen der ersten und zweiten Schiene aktiviert wird; und
Bewirken, dass die Breiteverstellungssperre entriegelt wird.

5. Das Verfahren nach Anspruch 4, das weiter umfasst:
Bewirken, nachdem die verschiebbare Schienensperre aktiviert wurde, dass der Förderer zu einer Produkteingabeposition bewegt wird.

6. Das Verfahren nach Anspruch 4 oder 5, das weiter umfasst:
Bewirken, dass die verschiebbare Schienensperre entriegelt wird, bevor bewirkt wird, dass sich die erste Schiene zur zweiten Schiene bewegt, wodurch die zweite Schiene zum Referenzpunkt verschoben wird.

7. Das Verfahren nach einem der vorstehenden Ansprüche, wobei dasselbe Stellglied (140) verwendet wird, um Strom zuzuführen, damit die erste und zweite Schiene so bewegt werden, dass die ermittelte Fördererspur-Breite erreicht wird, und damit der Förderer zur Produkteingabeposition verschoben wird.

8. Das Verfahren nach Anspruch 7, wobei dasselbe Stellglied einen Servomotor umfasst.

9. Das Verfahren nach einem der vorstehenden Ansprüche, wobei die Eingabedaten Benutzer-Eingabedaten umfassen.

10. Das Verfahren nach einem der vorstehenden Ansprüche, wobei die Eingabedaten mindestens die Breite mindestens eines zu befördernden Produkts angeben.

11. Eine Förderanordnung, wobei die Förderanordnung umfasst:
einen Förderer (100), dessen erste und zweite Schiene (110)(120) verschiebbar sind;
ein Stellglied (140); und
einen Controller (910), der so konfiguriert ist, dass mindestens folgende Vorgänge ausgeführt werden:
Erhalten von Eingabedaten über mindestens ein Produkt, das über den Förderer zu befördern ist,
Ermitteln einer Fördererspur-Breite auf der Basis der Eingabedaten, wobei die Fördererspur-Breite durch einen Abstand zwischen der ersten und zweiten Schiene des Förderers definiert ist, **dadurch gekennzeichnet, dass** der Controller weiter so konfiguriert ist, dass folgende Vorgänge ausgeführt werden:
Übertragen eines Steuersignals an das Stellglied, wobei bewirkt wird, dass sich die erste Schiene zur zweiten Schiene bewegt, wodurch die zweite Schiene zu einem Referenzpunkt verschoben wird, und
Übertragen eines Steuersignals an das Stellglied, nachdem die zweite Schiene den Referenzpunkt erreicht hat, wobei bewirkt wird, dass sich die erste Schiene in die entgegengesetzte Richtung bewegt, um die ermittelte Fördererspur-Breite zu erreichen.

12. Die Förderanordnung nach Anspruch 11, die weiter umfasst:
einen Anschlag (212)(222) zum Anhalten der zweiten Schiene am Referenzpunkt, und
eine Breiteverstellungssperre (214)(224) zum Verriegeln der zweiten Schiene am Referenzpunkt.

13. Die Förderanordnung nach Anspruch 11 oder 12, die weiter umfasst:
eine verstellbare Schienensperre (252)(254) zum Verriegeln eines Abstands zwischen der ersten und zweiten Schiene.

14. Die Förderanordnung nach Anspruch 13, wobei der Controller weiter so konfiguriert ist, dass folgende Vorgänge ausgeführt werden:
Übertragen eines Steuersignals an das Stellglied, nachdem die verschiebbare Schienensperre aktiviert wurde, wobei bewirkt wird, dass der Förderer zu einer Produkteingabeposition bewegt wird.

15. Ein Computerprogrammprodukt mit Befehlen, wobei bewirkt wird, dass eine Förderanordnung nach einem der Ansprüche 11 bis 14 die Schritte des Verfahrens nach einem der Ansprüche 1 bis 10 ausführt.

## Revendications

1. Procédé pour contrôler la largeur de voie de convoyeur, le procédé comprenant les étapes suivantes :
obtenir, grâce à un organe de commande (910) des données d'entrée concernant au moins un produit à transporter par un convoyeur ;
déterminer une largeur de voie de convoyeur sur la base des données d'entrée, la largeur de voie de convoyeur étant définie par une distance entre des premier et second rails (110) (120) du convoyeur, les premier et second rails étant mobiles ; **caractérisé en ce que** le procédé comprend en outre les étapes suivantes :
amener le premier rail à se déplacer vers le second rail, ce qui amène le second rail à se déplacer vers un point de référence ; et
après que le second rail a atteint le point de référence, amener le premier rail à se déplacer dans la direction opposée pour obtenir la largeur de voie de convoyeur déterminée.

2. Procédé selon la revendication 1, comprenant en outre les étapes suivantes :
amener le premier rail à pousser le second rail vers le point de référence ; et
arrêter, grâce à une butée (212) (222), le second rail au point de référence.

3. Procédé selon la revendication 1 ou 2, comprenant en outre les étapes suivantes :
amener un verrou d'ajustement de largeur (214) (224) à verrouiller le second rail sur le point de référence ; et
ajuster la largeur de voie de convoyeur en amenant le premier rail à se déplacer vers la direction opposée.

4. Procédé selon la revendication 1, 2 ou 3, comprenant en outre les étapes suivantes :
après avoir obtenu la largeur de voie de convoyeur déterminée, provoquer l'activation d'un verrou de rail mobile (252) (254) qui verrouille une distance entre les premier et second rails ; et
provoquer le déverrouillage du verrou d'ajustement de largeur.

5. Procédé selon la revendication 4, comprenant en outre l'étape suivante :
après que le verrou de rail mobile a été activé, amener le convoyeur à se déplacer vers une position d'entrée de produit.

6. Procédé selon la revendication 4 ou 5, comprenant en outre l'étape suivante :
provoquer le déverrouillage du verrou de rail mobile avant d'amener le premier rail à se déplacer vers le second rail, ce qui amène le second rail à se déplacer vers le point de référence.

7. Procédé selon l'une quelconque des revendications précédentes, dans lequel un même actionneur (140) est utilisé pour fournir l'énergie pour déplacer les premier et second rails afin d'obtenir la largeur de voie de convoyeur déterminée et afin de déplacer le convoyeur vers la position d'entrée de produit.

8. Procédé selon la revendication 7, dans lequel ledit même actionneur comprend un servomoteur.

9. Procédé selon l'une quelconque des revendications précédentes, dans lequel les données d'entrée comprennent des données d'entrée utilisateur.

10. Procédé selon l'une quelconque des revendications précédentes, dans lequel les données d'entrée indiquent au moins la largeur du au moins un produit à transporter.

11. Agencement de convoyeur, l'agencement de convoyeur comprenant :
un convoyeur (100) comprenant des premier et second rails (110) (120) qui sont mobiles ;
un actionneur (140) ; et
un organe de commande (910) configuré pour réaliser au moins les opérations comprenant les étapes suivantes :
obtenir des données d'entrée concernant au moins un produit à transporter avec le convoyeur ;
déterminer une largeur de voie de convoyeur sur la base des données d'entrée, la largeur de voie de convoyeur étant définie par une distance entre les premier et second rails mobiles, **caractérisé en ce que** l'organe de commande est en outre configuré pour réaliser les opérations suivantes comprenant les étapes suivantes :
transmettre un signal de commande à l'actionneur amenant le premier rail à se déplacer vers le second rail, ce qui amène le second rail à se déplacer vers un point de référence, et
après que le second rail a atteint le point de référence, transmettre un signal de commande à l'actionneur, amenant le premier rail à se déplacer dans la direction opposée pour obtenir la largeur de voie de convoyeur déterminée.

12. Agencement de convoyeur selon la revendication 11, comprenant en outre :
une butée (212) (222) pour arrêter le second rail au point de référence ; et
un verrou d'ajustement de largeur (214) (224) pour verrouiller le second rail au point de référence.

13. Agencement de convoyeur selon la revendication 11 ou 12, comprenant en outre :
un verrou de rail mobile (252) (254) pour verrouiller une distance entre les premier et second rails.

14. Agencement de convoyeur selon la revendication 13, dans lequel l'organe de commande est en outre configuré pour réaliser les opérations comprenant l'étape suivante :
après que le verrou de rail mobile a été activé, transmettre un signal de commande à l'actionneur amenant le convoyeur à se déplacer dans une position d'entrée de produit.

15. Produit de programme informatique comprenant des instructions pour amener un agencement de convoyeur selon l'une quelconque des revendications 11 à 14 à exécuter les étapes du procédé selon l'une quelconque des revendications 1 à 10.
